(19) Europäisches Patentamt

European Patent Office

Office européen des brevets

(11) **EP 1 523 195 A2**

(12) **EUROPEAN PATENT APPLICATION**

(43) Date of publication:
**13.04.2005 Bulletin 2005/15**

(51) Int Cl.$^7$: **H04N 7/26**, H04N 7/30, H04N 7/50

(21) Application number: **04014575.7**

(22) Date of filing: **22.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **11.10.2003 KR 2003070870**

(71) Applicant: **LG ELECTRONICS INC.**
**Seoul (KR)**

(72) Inventor: **Seo, Kwang Deok**
**Gyeonggi-Do (KR)**

(74) Representative: **von Hellfeld, Axel, Dr. Dipl.-Phys.**
**Wuesthoff & Wuesthoff**
**Patent- und Rechtsanwälte**
**Schweigerstrasse 2**
**81541 München (DE)**

(54) **Method and apparatus for decoding digital image data**

(57)     A method is provided for decoding digital image data in order to improve a picture quality of a reproduced image by performing a dequantizing in consideration of an input DCT coefficient having a laplacian distribution. The digital image data decoding method of a digital image data decoder may dequantize digital image data using a quantizer having characteristics of mapping an input DCT coefficient $x_{ij}$ to a restoration level $y_{ij}$. This may occur by estimating a probability distribution function $p(x_{ij})$ of the input DCT coefficient $x_{ij}$, calculating a mass center $C_m$, and setting the mass center as a restoration level.

FIG. 4

```
            START
              │
              ▼
S1 ─ CALCULATE PROBABILITY DISTRIBUTION
     FUNCTION P(Yij=0)
              │
              ▼
S2 ─ CALCULATE RELIABLE ESTIMATE VALUE
     OF LAPLACIAN PARAMETER
              │
              ▼
S3 ─ CALCULATE LAPLACIAN PARAMETER
              │
              ▼
S4 ─ CALCULATE PROBABILITY DISTRIBUTION
     FUNCTION P(Xij)
              │
              ▼
S5 ─ CALCULATING MASS CENTER
              │
              ▼
S6 ─ SET MASS CENTER AS RESTORATION
     LEVEL
              │
              ▼
            END
```

EP 1 523 195 A2

**Description**

The present disclosure claims priority from Korean Patent Application No. 70870/2003, filed October 11, 2003, the subject matter of which is incorporated herein by reference.

**BACKGROUND OF THE INVENTION**

**1. Field of the Invention**

Embodiments of the present invention may relate to a method for decoding digital image data. More particularly, embodiments of the present invention may relate to a method for decoding digital image data based on a receiving side dequantization method.

**2. Background of Related Art**

Digital image service providing high capacity/high picture quality video has received attention due to the development of image media in which demands are increasing for compressing large amounts of image data for transmission through relatively fewer communication channels and storing the data.

In signal processing and image compression, an input signal has a consecutive real number value so that an expression of such a value as it is would increase the amount of data infinitely, causing problems related to memory and processing rates. Thus, the amount of data of an input signal may need to be expressed as a discrete value. Quantization is a methodology to express an input value of 'x' expressed in a real number as a finite number of bits.

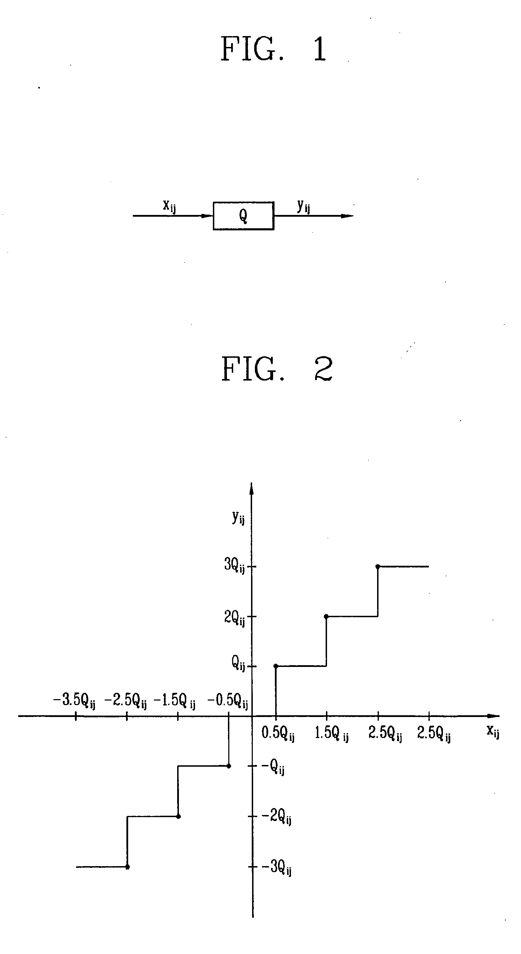

Figure 1 illustrates a quantization process (or methodology) applied to an intra frame of JPEG and/or MPEG data according to one arrangement. Other arrangements are also possible. As shown in Figure 1, a quantizer Q maps an inputted DCT coefficient $x_{ij}$ (i,j=0,1,...,7) to a restoration level $y_{ij}$. The restoration level $y_{ij}$ has a value belonging to a set $\{r_1,...,r_L\}$ of which 'L' is a number of levels of the quantizer.

A mapping process of the quantizer will now be described. A set $\{t_m, m = 1,...,L + 1\}$ is a range of the DCT coefficient $x_{ij}$, and has a determining level having $t_1$ and $t_{L+1}$ as a minimum value and a maximum value, respectively.

If the DCT coefficient $x_{ij}$ belongs to the interval $\{t_m,t_{m+1}\}$, the DCT coefficient is mapped to the mth restoration level $r_m$. An input/output mapping relation of Figure 1 for the DCT coefficient $x_{ij}$ can be expressed by the following Equation (1):

$$y_{ij} = round\left(\frac{x_{ij}}{Q_{ij}}\right) \cdot Q_{ij} \qquad \text{Equation (1)}$$

, wherein a function round(x) outputs a constant value closest to 'x', and $Q_{ij}$ is a size of the quantization.

As the DCT coefficient $x_{ij}$ belongs to the interval $\{t_m,t_{m+1}\}$, the DCT coefficient $x_{ij}$ is expressed as $x_m = \{x \mid x \in \{t_m,t_{m+1}\}\}$, and an expression level for $x_m$ can be expressed from the following Equation (2):

$$l_m = round\left(\frac{x_m}{Q_{ij}}\right) \qquad \text{Equation (2)}$$

According to Equations (1) and (2), $x_m$ is mapped to a restoration level $r_m$ as set forth in the following Equation (3):

$$r_m = l_m \cdot Q_{ij} \qquad \text{Equation (3)}$$

Figure 2 is a graph showing input/output characteristics of the quantizer of Figure 1 according to an example arrangement. Other values, graphs and arrangements are also possible. When the DCT input $x_{ij}$ is $0 \leq x_{ij} < 0.5$, the restoration level $y_{ij}$ is '0', and when the DCT input $x_{ij}$ is $0.5 \leq x_{ij} < 1.5$, the restoration level $y_{ij}$ is 1. Other relationships of DCT input $x_{ij}$ may be seen from FIG. 2.

The quantization method may be a uniform quantization method. For example, the uniform quantizer as shown in Figure 1 may be simply designed and applied to a coding and decoding method of JPEG or MPEG, the digital image codec.

However, since the DCT coefficient inputted to the quantizer has a laplacian distribution, not a uniform distribution, the compression of image data using such a uniform quantization method may degrade a picture quality of a reproduced image.

Thus, in an effort to solve such problems relating to uniform quantizers, non-uniform quantizers have been proposed such as a Lloyd-Max quantizer. The Lloyd-Max quantizer may calculate an optimum determining level and restoration level so each quantization level may have a minimum average square error. This may have a very high complexity in its implementation. Thus, in its substantial application, a great amount of calculation may be required only to aggravate a system load.

Figure 1 shows a method for decoding a digital image data that performs dequantization by using the uniform quantizer.

If a probability distribution function of the input DCT coefficient makes a uniform distribution, the uniform decoding method may exhibit the same performance as the Lloyd-Max quantizer. However, since the input DCT coefficient has the laplacian distribution, quantization errors occur with digital image data decoding method using the uniform quantizer, so a picture quality of an image restored at the receiving side may be degraded.

## SUMMARY OF THE INVENTION

An object of embodiments of the invention is to solve at least the above problems and/or disadvantages and to provide at least the advantages described hereinafter.

Embodiments of the present invention may provide a method for decoding digital image data capable of enhancing picture quality by improving a dequantization method during decoding at a receiving side.

A method may be provided for decoding digital image data of a digital image data decoder dequantizing digital image data using a quantizer that maps an input DCT coefficient $x_{ij}$ to a restoration level $y_{ij}$. This may include estimating a probability distribution function $p(x_{ij})$ of the input DCT coefficient $x_{ij}$, calculating a mass center $C_m$, and setting the mass center as a restoration level.

A method may be provided for decoding digital image data that includes dequantizing an input DCT coefficient $x_{ij}$ to a restoration level $y_{ij}$ using a uniform quantization method. A probability distribution function $p(x_{ij})$ of the input DCT coefficient $x_{ij}$ may be estimated. A mass center $C_m$ may be calculated by using the probability distribution function $p(x_{ij})$, and the mass center $C_m$ may be set as the restoration level.

A method may be provided for decoding digital image data of a digital image data decoder that quantizes digital image data using a quantizer that maps an input DCT coefficient $x_{ij}$ to a restoration level $y_{ij}$. This may include counting values input as '0' for pixel positions (i,j) of each block of an input frame to calculate a probability distribution function $P(Y_{ij} = 0)$. A reliable estimate value $\widetilde{\lambda}_{ij}$ may be calculated for a laplacian parameter $\lambda_{ij}$ by using the probability distribution function $P(Y_{ij} = 0)$. The laplacian parameter $\lambda_{ij}$ may be calculated using the reliable estimate value $\widetilde{\lambda}_{ij}$. The probability distribution function $p(x_{ij})$ may be calculated with the laplacian parameter $\lambda_{ij}$. A mass center $C_m$ may be calculated by using the probability distribution function $p(x_{ij})$. The mass center may be set as a new restoration level.

Additional advantages, objects, features and embodiments of the present invention may be set forth in part in the description that follows and in part may become apparent to those having ordinary skill in the art upon examination of the following or may be learned from practice of the invention.

## BRIEF DESCRIPTION OF THE DRAWINGS

The following represents brief descriptions of the drawings in which like reference numerals refer to like elements and wherein:

Figure 1 illustrates an input/output relationship of a quantizer according to an example arrangement;
Figure 2 is a graph showing input/output characteristics of a quantizer according to an example arrangement;
Figures 3A and 3B are graphs comparatively showing an actual probability distribution at a position of (2,2) and (6,5) and a probability distribution calculated by using equation (7) according to an example arrangement;
Figure 4 is a flow chart of a method for decoding digital image data in accordance with an example embodiment of the present invention; and
Figure 5 is a graph showing a comparison between a rate-distortion performance of a quantizer according to an example embodiment of the present invention and a disadvantageous quantizer.

## DETAILED DESCRIPTION OF PREFERRED EMBODIMENTS

A method for decoding digital image data in accordance with example embodiments of the present invention will now be described. The digital image data decoding method may accomplish a performance similar to a Lloyd-Max quantizer, however, with less calculation than the Lloyd-Max quantizer.

From the point of view of quantization designing of the Lloyd-Max quantizer (i.e., the non-uniform quantizer), an optimum determining level may be positioned at a mass center of neighboring determining levels. Accordingly, a close-to-optimum level may be searched by estimating a probability distribution function of a DCT coefficient $x_{ij}$ input to the quantizer.

Instead of the restoration level $r_m$, a mass center of the interval $\{t_m, t_m+1\}$ may be determined as a new restoration level $C_m$ of the determining level $x_m$. The new restoration level $C_m$ may be expressed by the following Equation (4):

$$C_m = \frac{\int_{t_m}^{t_{m+1}} x_{ij} \cdot p(x_{ij})\, dx_{ij}}{\int_{t_m}^{t_{m+1}} p(x_{ij})\, dx_{ij}} \qquad \text{Equation (4)}$$

wherein $p(x_{ij})$ is a probability distribution function of the input DCT coefficient $x_{ij}$.

In order to apply Equation (4), a decoder should know the probability distribution function $p(x_{ij})$ of the input DCT coefficient $x_{ij}$. A method for effectively estimating the probability distribution function $p(x_{ij})$ of $x_{ij}$ will now be described. An AC (Alternate Current) component of a luminance DCT coefficient may be known as a laplacian distribution as shown by the following Equation (5):

$$p(x_{ij}) = \frac{\lambda_{ij}}{2} \cdot e^{-\lambda_{ij}|x_{ij}|} \qquad \text{Equation (5)}$$

wherein $\lambda_{ij}$ is a laplacian parameter that determines a distribution of the input DCT coefficient $x_{ij}$.

In digital coding and decoding, a unit of the DCT may be 8x8 blocks so that an individual laplacian parameter value $\lambda_{ij}$ may be assigned to total 63 AC components rather than one DC component.

An average of a probability parameter $|x_{ij}|$ may be calculated from the following Equation (6):

$$E\big(|x_{ij}|\big) = \int_{\infty}^{\infty} |x_{ij}| \cdot p(x_{ij})\, dx_{ij} = \int_{\infty}^{\infty} |x_{ij}| \cdot \frac{\lambda_{ij}}{2} e^{-\lambda_{ij}|x_{ij}|}\, dx_{ij} = \frac{1}{\lambda_{ij}} \qquad \text{Equation (6)}$$

The laplacian parameter $\lambda_{ij}$ may be obtained from Equation (6) as shown in the following Equation (7):

$$\lambda_{ij} = \frac{1}{E\big(|x_{ij}|\big)} \qquad \text{Equation (7)}$$

As shown in Equation (7), an inverse-relation may be established between the laplacian parameter $\lambda_{ij}$ and the average of the probability parameter $|x_{ij}|$.

The reliability of Equation (7) may be verified by comparing the laplacian parameter calculated by Equation (7) and a probability distribution function at a specific position of an actual block. Table 1 shows a result obtained from calculating the laplacian parameter on a 'couple' test image with a size of 512x512 by using Equation (7).

[Table 1]

| $\lambda_{ij}$ | | j | | | | | | | |
|---|---|---|---|---|---|---|---|---|---|
| | | 0 | 1 | 2 | 3 | 4 | 5 | 6 | 7 |
| i | 0 | - | 0.028 | 0.034 6 | 0.065 | 0.086 | 0.122 | 0.164 | 0.227 |
| | 1 | 0.030 | 0.068 | 0.100 | 0.128 | 0.166 | 0.221 | 0.280 | 0.330 |
| | 2 | 0.052 | 0.096 | 0.139 | 0.174 | 0.218 | 0.275 | 0.332 | 0.396 |
| | 3 | 0.078 | 0.129 | 0.183 | 0.230 | 0.279 | 0.352 | 0.423 | 0.484 |
| | 4 | 0.106 | 0.160 | 0.219 | 0.274 | 0.328 | 0.404 | 0.460 | 0.523 |
| | 5 | 0.142 | 0.196 | 0.267 | 0.330 | 0.377 | 0.460 | 0.508 | 0.572 |
| | 6 | 0.183 | 0.237 | 0.297 | 0.372 | 0.409 | 0.496 | 0.552 | 0.600 |
| | 7 | 0.234 | 0.275 | 0.348 | 0.406 | 0.458 | 0.545 | 0.595 | 0.625 |

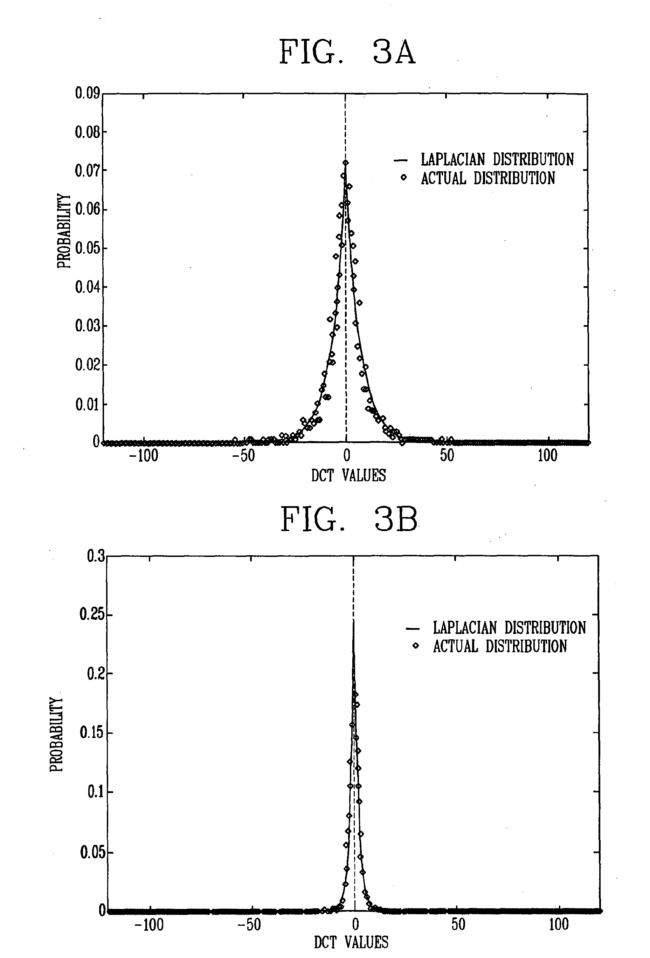

Figures 3A and 3B are graphs comparatively showing an actual probability distribution and a probability distribution calculated by Equation (7). More specifically, Figure 3A is a graph showing a comparison between an actual probability distribution at a position (2,2) of an 8x8 block and a probability distribution implemented using the laplacian parameter $\lambda_{22}$=0.139 of Table 1. It is noted that the actual probability distribution and the probability distribution calculated using Equation (7) are almost similar.

Figure 3B is a graph showing a comparison between an actual probability distribution at a position (6,5) and a probability distribution implemented using a Table 1 laplacian parameter $\lambda_{65}$=0.496. It is noted that the actual probability distribution and the probability distribution using Equation (7) are almost similar. That is, the reliability of equation (7) may be guaranteed.

However, since the only information that the decoder can know about the input DCT coefficient $x_{ij}$ is the restoration level $y_{ij}$, an average $E(|x_{ij}|)$ of the probability parameter $|x_{ij}|$ may be estimated using the given information $y_{ij}$.

The average $E(|x_{ij}|)$ of the probability parameter $|x_{ij}|$ may be approximated by the following Equation (8):

$$E\left(\left|x_{ij}\right|\right) = \int_{-\infty}^{\infty} \left|x_{ij}\right| \cdot p(x_{ij}) \, dx_{ij}$$

$$= 2 \cdot \int_0^{\frac{Q_{ij}}{2}} x_{ij} \cdot p(x_{ij}) \, dx_{ij} + 2 \cdot \int_{\frac{Q_{ij}}{2}}^{\infty} x_{ij} \cdot p(x_{ij}) \, dx_{ij}$$

$$\cong 2 \cdot \int_0^{\frac{Q_{ij}}{2}} x_{ij} \cdot p(x_{ij}) \, dx_{ij} + E\left(\left|y_{ij}\right|\right) \qquad \text{Equation (8)}$$

In Equation (8), the second item $(E(|y_{ij}|))$ is a master (critical) value. However, the first item

$$\left( 2 \cdot \int_0^{\frac{Q_{ij}}{2}} x_{ij} \cdot p(x_{ij}) \, dx_{ij} \right)$$

can not be neglected for a large value $Q_{ij}$. Thus, in order to calculate the first item, an estimate value having a high reliability for the laplacian parameter $\lambda_{ij}$ may be calculated.

In order to calculate a reliable estimate value for the laplacian parameter $\lambda_{ij}$, a probability relation equation that can be obtained from Figure 2 may be used as follows:

$$P(Y_{ij} = 0) = P\left(|x_{ij}| \le \frac{Q_{ij}}{2}\right) = 2 \cdot \int_0^{\frac{Q_{ij}}{2}} \frac{\lambda_{ij}}{2} \cdot e^{-\lambda_{ij}|x_{ij}|} dx_{ij} = 1 - e^{-\lambda_{ij}\frac{Q_{ij}}{2}}$$

Equation (9)

In Equation (9), $P(Y_{ij}) = 0$ can be known by calculating a number of '0' at a (i,j)th position of an entropy-decoded 8x8 block. The laplacian parameter $\lambda_{ij}$ may be obtained by using $P(Y_{ij}) = 0$ and expressed by the following Equation (10):

$$\lambda_{ij} = \frac{2}{Q_{ij}} \ln[1 - P(Y_{ij} = 0)] \qquad \text{Equation (10)}$$

, wherein a function $ln(x)$ is a natural logarithm function of 'x'.

A reliable estimate value for the laplacian parameter $\lambda_{ij}$ may be expressed by the following Equation (11):

$$E(|x_{ij}|) \cong 2 \cdot \int_0^{\frac{Q_{ij}}{2}} x_{ij} \cdot \frac{\tilde{\lambda}_{ij}}{2} e^{\frac{\tilde{\lambda}_{ij}}{2}x_{ij}} dx_{ij} + E(|y_{ij}|)$$

$$= \frac{1}{\tilde{\lambda}_{ij}} - e^{-\lambda_{ij}Q_{ij}/2}\left(\frac{1}{\tilde{\lambda}_{ij}} + \frac{Q_{ij}}{2}\right) + E(|y_{ij}|) \qquad \text{Equation (11)}$$

The laplacian parameter $\lambda_{ij}$ may be expressed by the following Equation (12) based on Equation (11) and Equation (7):

$$\lambda_{ij} = \frac{1}{E(|x_{ij}|)} \cong \frac{1}{\frac{1}{\tilde{\lambda}_{ij}} - e^{-\lambda_{ij}Q_{ij}/2}\left(\frac{1}{\tilde{\lambda}_{ij}} + \frac{Q_{ij}}{2}\right) + E(|y_{ij}|)}$$

$$= \frac{\tilde{\lambda}_{ij}}{1 - e^{-\lambda_{ij}Q_{ij}/2}\left(1 + \frac{Q_{ij}\tilde{\lambda}_{ij}}{2}\right) + \tilde{\lambda}_{ij} \cdot E(|y_{ij}|)} \qquad \text{Equation (12)}$$

In order to verify the reliability of Equation (12), a test image with a size of 512x512 was coded using a quantization table of JPEG, and then the laplacian parameter value $\lambda_{ij}$ was calculated using Equation (12).

Table 2 shows the laplacian parameter value $\lambda_{ij}$ calculated by using Equation (12). The result values of [Table 1] and [Table 2] are quite similar.

[Table 2]

| $\lambda_{ij}$ | | j | | | | | | | |
| --- | --- | --- | --- | --- | --- | --- | --- | --- | --- |
| | | 0 | 1 | 2 | 3 | 4 | 5 | 6 | 7 |
| i | 0 | - | 0.028 | 0.034 6 | 0.065 | 0.086 | 0.122 | 0.164 | 0.227 |
| | 1 | 0.030 | 0.068 | 0.100 | 0.128 | 0.166 | 0.221 | 0.280 | 0.330 |
| | 2 | 0.052 | 0.096 | 0.139 | 0.174 | 0.218 | 0.275 | 0.332 | 0.396 |
| | 3 | 0.078 | 0.129 | 0.183 | 0.230 | 0.279 | 0.352 | 0.423 | 0.484 |
| | 4 | 0.106 | 0.160 | 0.219 | 0.274 | 0.328 | 0.404 | 0.460 | 0.523 |
| | 5 | 0.142 | 0.196 | 0.267 | 0.330 | 0.377 | 0.460 | 0.508 | 0.572 |
| | 6 | 0.183 | 0.237 | 0.297 | 0.372 | 0.409 | 0.496 | 0.552 | 0.600 |
| | 7 | 0.234 | 0.275 | 0.348 | 0.406 | 0.458 | 0.545 | 0.595 | 0.625 |

Accordingly, the reliability of Equation (12) has been verified that estimates the laplacian parameter using the reliable estimate value $\widetilde{\lambda}_{ij}$ of the laplacian parameter $\lambda_{ij}$.

Consequently, the mass center of Equation (4) may be calculated using the laplacian parameter $\lambda_{ij}$ obtained by Equation (12), and the calculated mass center value may be determined as a restoration level. By so doing, more accurate restoration level values may be calculated than the restoration level obtained by disadvantageous uniform quantization methods. Since a noise generated due to quantization is reduced, the picture quality of a decoded image can be improved.

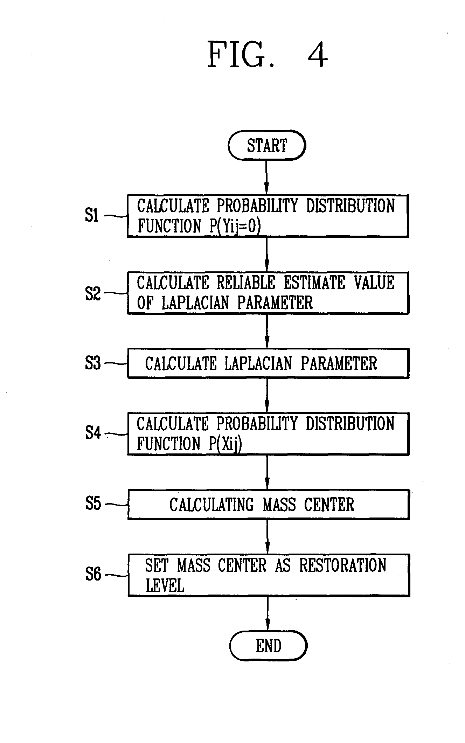

Figure 4 is a flow chart of a method for decoding digital image data in accordance with an example embodiment of the present invention. Other operations, orders of operations and embodiments are also within the scope of the present invention. More specifically, Figure 4 shows decoding by applying the above-described content to a receiving side of a digital image system.

A probability distribution function $P(Y_{ij} = 0)$ may be calculated by counting values input as '0' for 64 pixel positions (i,j) of each 8x8 block of a frame input to the receiving side (step S1). A reliable estimate value $\widetilde{\lambda}_{ij}$ for the laplacian parameter $\lambda_{ij}$ may be obtained (or calculated) by applying the calculated probability distribution function $P(Y_{ij} = 0)$ to Equation (10) (step S2).

The laplacian parameter $\lambda_{ij}$ may be calculated by substituting the reliable estimate value $\widetilde{\lambda}_{ij}$ to Equation (12) (step S3). A quantization size $Q_{ij}$ required for calculating Equation (12) may be known from quantization parameter information included in a header of a bit stream input to the receiving side.

The laplacian parameter $\lambda_{ij}$ calculated by Equation (12) may be substituted into Equation (5) in order to obtain a laplacian probability distribution function $P(x_{ij})$ at each pixel position (i,j) (step S4), and then, the laplacian probability distribution function $P(x_{ij})$ may be applied to Equation (4) to calculate a mass center (step S5). The obtained mass center may be set as a restoration level (step S6). By setting the mass center as a restoration level, a picture quality of a restored image may be improved compared to disadvantageous decoding methods.

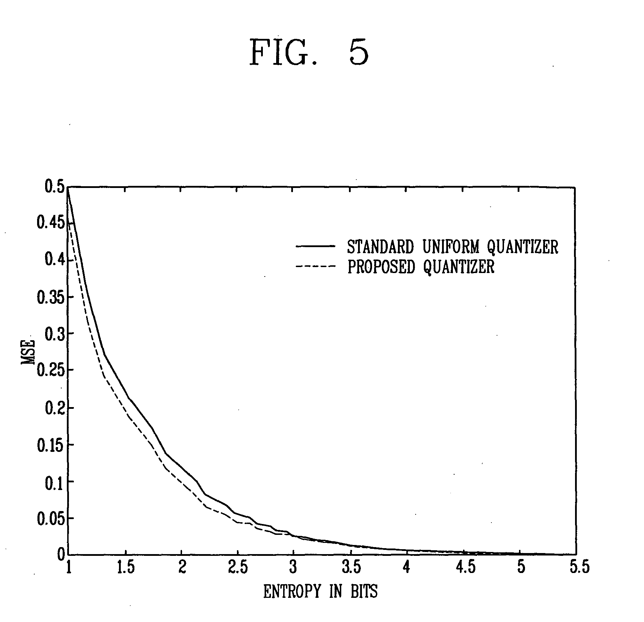

Figure 5 is a graph showing a comparison between a rate-distortion performance of a quantizer in accordance with an example embodiment of the present invention and a disadvantageous uniform quantizer. Other graphs and differences are also within the scope of the present invention.

As shown in Figure 5, the result values according to an example embodiment of the present invention may have low average square errors at every entropy level as compared to a disadvantageous uniform quantizer. Therefore, the decoding method of an example embodiment of the present invention may have superior performance as compared to disadvantageous decoding methods. That is, the performance at a small entropy level is far better as compared to a disadvantageous quantizer.

Table 3 shows a comparison of PSNR (Peak Signal to Noise Ratio) in order to objectively evaluate picture quality of a reproduced image obtained by applying the decoding method of an example embodiment of the present invention labeled Proposed Method) and a disadvantageous decoding method (labeled Standard JPEG Method).

[Table 3]

| Image | Quality Factor(q) | Standard JPEG Method(dB) | Proposed Method(dB) | Improvement (dB) |
|---|---|---|---|---|
| Lena | 1 | 35.86 | 36.07 | 0.21 |
| | 3 | 32.59 | 32.90 | 0.31 |
| | 5 | 30.87 | 31.35 | 0.48 |
| | 7 | 29.67 | 30.21 | 0.54 |
| | 10 | 28.36 | 28.90 | 0.50 |
| | 15 | 26.85 | 27.36 | 0.48 |
| | 20 | 25.62 | 26.14 | 0.47 |
| Couple | 1 | 34.85 | 35.08 | 0.23 |
| | 3 | 31.39 | 31.71 | 0.32 |
| | 5 | 29.70 | 30.13 | 0.43 |
| | 7 | 28.60 | 29.08 | 0.48 |
| | 10 | 27.44 | 27.90 | 0.46 |
| | 15 | 26.06 | 26.56 | 0.50 |
| | 20 | 25.06 | 25.53 | 0.47 |
| Peppers | 1 | 34.90 | 37.17 | 0.27 |
| | 3 | 32.37 | 32.72 | 0.35 |
| | 5 | 30.92 | 31.29 | 0.27 |
| | 7 | 29.81 | 30.30 | 0.49 |
| | 10 | 28.55 | 29.03 | 0.48 |
| | 15 | 27.01 | 27.52 | 0.51 |
| | 20 | 25.82 | 26.34 | 0.52 |

Images of 'Lena', 'Couple' and 'Peppers' were used as test images for evaluation, which are all 8 bit gray images with a size of 512x512. For various kinds of tests, a quality factor 'q' may control quantization quality of each test image at several levels.

As determined from Table 3, for the quality factor 'q', the PSNR value according to the decoding method of an example embodiment of the present invention may be higher than the PSNR value according to the disadvantageous decoding method. A PSNR gain obtained by decoding methods of example embodiments of the present invention may be about 0.2 ~ 0.5 dB.

The method for decoding digital image data in accordance with an example embodiment of the present invention may have an advantage that it can be applied to most digital image decoders adopting uniform quantizers such that picture quality of a reproduced image can be improved using a restoration level optimized to the mass center.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

## Claims

1.  A method for decoding digital image data of a digital image data decoder that dequantizes digital image data using a quantizer that maps an input DCT coefficient $x_{ij}$ to a restoration level $y_{ij}$, the method comprising:

    estimating a probability distribution function $p(x_{ij})$ of an input DCT coefficient $x_{ij}$;
    calculating a mass center $C_m$; and

setting the mass center as the restoration level.

2. The method of claim 1, wherein the mass center $C_m$ is calculated by

$$C_m = \frac{\int_{t_m}^{t_{m+1}} x_{ij} \cdot p(x_{ij}) \, dx_{ij}}{\int_{t_m}^{t_{m+1}} p(x_{ij}) \, dx_{ij}}$$

wherein $t_m \leq x_{ij} < t_{m+1}$.

3. The method of claim 1, wherein estimating the probability distribution function $p(x_{ij})$ comprises:

counting values input as '0' for a pixel position (i,j) of each block of a frame input to the decoder so as to calculate a probability distribution function $P(Y_{ij} = 0)$ ;
calculating a reliable estimate value $\tilde{\lambda}_{ij}$ for a laplacian parameter $\lambda_{ij}$ based on the probability distribution function $P(Y_{ij} = 0)$ ;
calculating the laplacian parameter $\lambda_{ij}$ based on the reliable estimate value $\tilde{\lambda}_{ij}$ ; and
calculating a probability distribution function $p(x_{ij})$ based on the calculated laplacian parameter $\lambda_{ij}$.

4. The method of claim 3, wherein the reliable estimate value $\tilde{\lambda}_{ij}$ is calculated by

$$\tilde{\lambda}_{ij} = -\frac{2}{Q_{ij}} \ln\left[1 - P(Y_{ij} = 0)\right].$$

5. The method of claim 4, wherein a quantization size $Q_{ij}$ is determined based on quantization parameter information included in a header of a bit stream of an input frame.

6. The method of claim 3, wherein the laplacian parameter $\lambda_{ij}$ is calculated by

$$\lambda_{ij} = \frac{\tilde{\lambda}_{ij}}{1 - e^{-\lambda_{ij} Q_{ij}/2}\left(1 + \frac{Q_{ij}\tilde{\lambda}_{ij}}{2}\right) + \tilde{\lambda}_{ij} \cdot E\left(\left|y_{ij}\right|\right)}.$$

7. The method of claim 3, wherein the probability distribution function $p(x_{ij})$ is calculated by $p(x_{ij}) = \frac{\lambda_{ij}}{2} \cdot e^{-\lambda_{ij}|x_{ij}|}$.

8. A method for decoding digital image data comprising:

receiving an input DCT coefficient $x_{ij}$;
estimating a probability distribution function $p(x_{ij})$ of the input DCT coefficient $x_{ij}$;
calculating a mass center $C_m$ based on the estimated probability distribution function $p(x_{ij})$; and
setting the calculated mass center as a restoration level.

9. The method of claim 8, further comprising performing a quantization method using the restoration level.

10. The method of claim 8, wherein estimating the probability distribution function $p(x_{ij})$ comprises:

counting values input as '0' for a pixel position (i,j) of each block of a frame input to a decoder so as to calculate a probability distribution function $P(Y_{ij}=0)$;
calculating a reliable estimate value $\tilde{\lambda}_{ij}$ for the laplacian parameter $\lambda_{ij}$ based on the probability distribution function $P(Y_{ij} = 0)$;
calculating the laplacian parameter $\lambda_{ij}$ based on the reliable estimate value $\tilde{\lambda}_{ij}$ ; and
calculating the probability distribution function $p(x_{ij})$ based on the calculated laplacian parameter $\lambda_{ij}$.

**11.** The method of claim 10, wherein the reliable estimate value $\tilde{\lambda}_{ij}$ is calculated using

$$\tilde{\lambda}_{ij} = -\frac{2}{Q_{ij}}\ln\left[1 - P(Y_{ij} = 0)\right].$$

**12.** The method of claim 11, wherein a quantization size $Q_{ij}$ is determined based on quantization parameter information included in a header of a bit stream of an input frame.

**13.** The method of claim 10, wherein the laplacian parameter $\lambda_{ij}$ is calculated

$$\text{using } \lambda_{ij} = \frac{\tilde{\lambda}_{ij}}{1 - e^{-\lambda_{ij}Q_{ij}/2}\left(1 + \frac{Q_{ij}\tilde{\lambda}_{ij}}{2}\right) + \tilde{\lambda}_{ij} \cdot E\left(|y_{ij}|\right)}.$$

**14.** The method of claim 13, wherein the average $E(|y_{ij}|)$ is calculated from the restoration level $y_{ij}$.

**15.** The method of claim 10, wherein $p(x_{ij})$ is calculated by $p(x_{ij}) = \frac{\lambda_{ij}}{2} \cdot e^{-\lambda_{ij}|x_{ij}|}$.

**16.** The method of claim 10, wherein the mass center $C_m$ is calculated using

$$C_m = \frac{\int_{t_m}^{t_{m+1}} x_{ij} \cdot p(x_{ij})\,dx_{ij}}{\int_{t_m}^{t_{m+1}} p(x_{ij})\,dx_{ij}},$$

wherein $t_m \le x_{ij} < t_{m+1}$.

**17.** A method for decoding digital image data of a digital image data decoder using a quantizer that maps an input DCT coefficient $x_{ij}$ to a restoration level $y_{ij}$, the method comprising:

counting values input as '0' for pixel positions (i,j) of each block of an input frame so as to calculate a probability distribution function $P(Y_{ij} = 0)$;
calculating a reliable estimate value $\tilde{\lambda}_{ij}$ for a laplacian parameter $\lambda_{ij}$ using the probability distribution function $P(Y_{ij} = 0)$;
calculating the laplacian parameter $\lambda_{ij}$ using the reliable estimate value $\tilde{\lambda}_{ij}$ ;
calculating a probability distribution function $p(x_{ij})$ based on the calculated laplacian parameter $\lambda_{ij}$ ;
calculating a mass center $C_m$ using the probability distribution function $p(x_{ij})$; and
setting the mass center as a new restoration level.

**18.** The method of claim 17, wherein the reliable estimate value $\tilde{\lambda}_{ij}$ is calculated using

$$\widetilde{\lambda}_{ij} = -\frac{2}{Q_{ij}} \ln\left[1 - P(Y_{ij} = 0)\right].$$

**19.** The method of claim 17, wherein a quantization size $Q_{ij}$ is determined based on quantization parameter information included in a header of a bit stream of an input frame.

**20.** The method of claim 17, wherein the laplacian parameter $\lambda_{ij}$ is calculated using

$$\lambda_{ij} = \frac{\widetilde{\lambda}_{ij}}{1 - e^{-\lambda_{ij}Q_{ij}/2}\left(1 + \frac{Q_{ij}\widetilde{\lambda}_{ij}}{2}\right) + \widetilde{\lambda}_{ij} \cdot E\left(\left|y_{ij}\right|\right)}.$$

**21.** The method of claim 17, wherein $p(x_{ij})$ is calculated using $p(x_{ij}) = \frac{\lambda_{ij}}{2} \cdot e^{-\lambda_{ij}|x_{ij}|}$.

**22.** The method of claim 17, wherein the mass center $C_m$ is calculated using

$$C_m = \frac{\int_{t_m}^{t_{m+1}} x_{ij} \cdot p(x_{ij})\, dx_{ij}}{\int_{t_m}^{t_{m+1}} p(x_{ij})\, dx_{ij}},$$

wherein $t_m \le x_{ij} < t_{m+1}$.

**23.** An apparatus to decode digital image data by estimating a probability distribution function of an input DCT coefficient, calculating a mass center based on the estimated probability distribution function and setting the mass center as the restoration level.

**24.** The apparatus of claim 23, wherein the apparatus performs a quantization method using the restoration level.

**25.** The apparatus of claim 23, wherein estimating the probability distribution function $p(x_{ij})$ comprises:

counting values input as '0' for a pixel position (i,j) of each block of a frame input to a decoder so as to calculate a probability distribution function $P(Y_{ij} = 0)$;
calculating a reliable estimate value $\widetilde{\lambda}_{ij}$ for the laplacian parameter $\lambda_{ij}$ based on the probability distribution function $p(Y_{ij} = 0)$;
calculating the laplacian parameter $\lambda_{ij}$ based on the reliable estimate value $\widetilde{\lambda}_{ij}$; and
calculating the probability distribution function $p(x_{ij})$ based on the calculated laplacian parameter $\lambda_{ij}$.

# FIG. 1

# FIG. 2

# FIG. 3A

# FIG. 3B

# FIG. 4

```
                    ( START )
                        |
                        v
S1 ─┤ CALCULATE PROBABILITY DISTRIBUTION
      FUNCTION P(Yij=0)
                        |
                        v
S2 ─┤ CALCULATE RELIABLE ESTIMATE VALUE
      OF LAPLACIAN PARAMETER
                        |
                        v
S3 ─┤ CALCULATE LAPLACIAN PARAMETER
                        |
                        v
S4 ─┤ CALCULATE PROBABILITY DISTRIBUTION
      FUNCTION P(Xij)
                        |
                        v
S5 ─┤ CALCULATING MASS CENTER
                        |
                        v
S6 ─┤ SET MASS CENTER AS RESTORATION
      LEVEL
                        |
                        v
                     ( END )
```

# FIG. 5